# EUROPÄISCHE PATENTSCHRIFT

(11) **EP 1 991 849 B1**
(45) Veröffentlichungstag und Bekanntmachung des Hinweises auf die Patenterteilung: **21.11.2012**
(21) Anmeldenummer: 07711217.5
(22) Anmeldetag: 01.03.2007
(51) Int. Cl.: G01L 9/04, G01L 23/18, G01L 19/04

(54) **HOCHTEMPERATUR-DRUCKSENSORELEMENT, INSBESONDERE ZUR MESSUNG VON DRÜCKEN INNERHALB VON TRIEBWERKEN, VERFAHREN ZU DESSEN HERSTELLUNG UND BAUTEIL FÜR TRIEBWERKE**
HIGH TEMPERATURE PRESSURE SENSOR ELEMENT, PARTICULARLY FOR MEASURING PRESSURES INSIDE JET ENGINES, METHOD FOR THE PRODUCTION THEREOF AND COMPONENT FOR JET ENGINES
ÉLÉMENT DE CAPTEUR HAUTE PRESSION NOTAMMENT DESTINÉ À MESURER DES PRESSIONS DANS DES RÉACTEURS, PROCÉDÉ DE FABRICATION DE CET ÉLÉMENT ET COMPOSANT DESTINÉ À DES RÉACTEURS

(30) Priorität: 07.03.2006 DE 102006010804
(43) Veröffentlichungstag der Anmeldung: 19.11.2008
(73) Patentinhaber: Astrium GmbH, 81663 München (DE)
(72) Erfinder: FRICKE, Sören, 85635 Höhenkirchen-Siegertsbrunn (DE); MÜLLER, Gerhard, 85567 Grafing (DE); FRIEDBERGER, Alois, 85667 Oberpframmern (DE); ROSE, Eberhard, 85560 Ebersberg (DE); ZIEMANN, Thomas, 84418 Inning am Holz (DE); SCHMID, Ulrich, 66125 Saarbrücken (DE); TELITSCHKIN, Dimitri, 74074 Heilbronn (DE); ZIEGENHAGEN, Stefan, 69245 Bammental (DE)
(86) Internationale Anmeldenummer: PCT/DE2007/000382
(87) Internationale Veröffentlichungsnummer: WO 2007/101426

(56) Entgegenhaltungen:
- EP-A1- 1 464 941
- EP-A2- 0 468 098
- EP-A2- 0 561 397
- DE-A1- 19 736 306
- FR-A- 2 057 215
- GB-A- 2 037 993
- US-A- 3 071 745

## Beschreibung

Die vorliegende Erfindung betrifft ein Hochtemperatur-Drucksensorelement gemäß dem Oberbegriff von Patentanspruch 1, ein Bauteil für Triebwerke gemäß dem Oberbegriff von Patentanspruch 12, sowie ein Verfahren zur Herstellung eines Hochtemperatur-Drucksensorelements gemäß dem Oberbegriff von Patentanspruch 13. Insbesondere ist das Hochtemperatur-Drucksensorelement zur Messung von Drücken innerhalb von Triebwerken geeignet.

Drucksensoren werden in verschiedenen Bereichen der Technik eingesetzt, um Drücke von Gasen oder Flüssigkeiten zu messen. Dabei sind die Drucksensoren in vielen Fällen besonders hohen Belastungen ausgesetzt, die von dem Zustand des Mediums abhängen, in dem die Druckmessung durchgeführt wird. Oftmals unterscheiden sich die auf den Drucksensor wirkenden Drücke erheblich. Ein Drucksensor muss daher einerseits hohen Belastungen standhalten und soll andererseits genaue Messergebnisse liefern.

Insbesondere bei Messungen innerhalb von Triebwerken, beispielsweise Strahltriebwerken von Flugzeugen oder Raketentriebwerken, muss der Drucksensor den dort herrschenden sehr hohen Temperaturen standhalten und trotz extremer Umgebungsbedingungen, die hohen Schwankungen unterliegen, geringe Fehler bzw. Messungenauigkeiten aufweisen. Dies trifft auch für andere Anwendungsfälle zu, wie beispielsweise innerhalb von Motoren und sonstigen Verbrennungskraftmaschinen, usw.

Bekannte Drucksensoren haben eine Membran, die sich bei einer Druckdifferenz auf beiden Seiten der Membran verformt. Beispielsweise durch piezoresistive oder piezoelektrische Elemente, die auf einer Seite der Membran angeordnet sind, wird die Verformung der Membran gemessen.

Besonders bei großen Temperaturbelastungen besteht das Problem, dass sich die Membran des Drucksensors verspannt oder sich in ihrem Rahmen oder ihrer Aufhängung verzieht. Die Folge sind ungenaue Messungen oder verfälschte Messergebnisse, die insbesondere bei großen Temperaturschwankungen auftreten. Bei klassischen mikromechanischen Siliziummembranen besteht überdies das Problem der plastischen Verformung bei hohen Temperaturen.

Häufig besteht das Gehäuse aus Metall mit einem hohen thermischen Ausdehnungskoeffizienten, während das Sensorelement und dessen Komponenten aus Silizium, Siliziumkarbid, keramischen Materialien o.ä. gefertigt sind, deren Ausdehnungskoeffizient deutlich geringer ist als der von Metallen. Dadurch kommt es während des Betriebes bei hohen Temperaturen aufgrund der unterschiedlichen Ausdehnung zu mechanischen Verspannungen, die sich auf die Membran fortpflanzen. Diese thermisch induzierten Spannungen verfälschen das Messsignal.

Die Druckschrift DE 196 44 830 C1 zeigt einen Drucksensor mit einem Gehäuse, dessen Innenraum durch eine Membran verschlossen wird, und piezoelektrischen Elementen, die bei einer Verformung der Membran ein entsprechendes Signal erzeugen. Durch ein zusätzliches flexibles Messelement, das an die Membran gekoppelt ist und dessen Verformung gemessen wird, wird erreicht, dass die Messergebnisse nicht durch auftretende Verspannungen der Membran verfälscht werden und z.B. auch bei stark wechselnden Temperaturen genaue und zuverlässige Messungen durchgeführt werden können. Derartige Lösungen haben jedoch den Nachteil eines relativ hohen konstruktiven Aufwandes.

Zur Messung von Verspannungen bei hohen Temperaturen eignen sich beispielsweise Indium-Zinnoxide, wie es in dem Artikel "High temperature stability of indium tin oxide thin films", Otto J. Gregory et al., Thin Solid Films 406 (2002) 286 - 293, und in "A self-compensated ceramic strain gage for use at elevated temperatures", Otto J. Gregory, Q. Luo, Sensors and Actuators A 88 (2001) 234 - 240 beschrieben wird.

Aus der US 3,071,745 A ist ein Drucksensorelement bekannt, bei welchem ein Substrat an einer Stirnseite mit einer Ausnehmung versehen ist, in die eine das Substrat durchdringende Kommunikationsbohrung mündet. Auf der Seite der Ausnehmung ist auf das Substrat eine Membran aufgebracht, die mit Dehnungsmesselementen versehen ist. Auf diese Weise bildet die Ausnehmung einen Innenraum des Drucksensorelements, welcher über die Kommunikationsbohrung mit einem Druckmessanschluss in Fluidverbindung steht.

Die FR 2 057 215 A offenbart eine verformbare Membran, die mit Dehnungsmesselementen versehen ist. Die Membran ist dabei in einem rohrförmigen Gehäuseabschnitt vorgesehen und mit diesem rohrförmigen Gehäuse einstückig ausgebildet. Die auf der Membran vorgesehenen Dehnungsmesselemente sind aus einem leitfähigen Material gebildet, welches unter anderem einen Wärmeausdehnungskoeffizienten besitzt, der nahe an dem Wärmeausdehnungskoeffizienten der Membran liegt.

Es ist die Aufgabe der vorliegenden Erfindung, einen Hochtemperatur-Drucksensor bereitzustellen, der zur Messung von Drücken bei Temperaturen bis weit über 400 °C geeignet ist, wie sie z.B. in Triebwerken von Luftfahrzeugen vorherrschen, und dabei genaue Messergebnisse bei einer verlängerten Lebensdauer liefert. Weiterhin soll ein Verfahren zur Herstellung eines derartigen Hochtemperatur-Drucksensors angegeben werden.

Der erfindungsgemäße Hochtemperatur-Drucksensor ist insbesondere für Triebwerke geeignet und umfasst ein Substrat, in dem ein Innenraum ausgestaltet ist, eine verformbare Membran, die im Betrieb den Innenraum vom Außenraum trennt, um sich bei einer Änderung des äußeren Druckes zu verformen, und ein Dehnungsmesselement, das auf der Membran angeordnet ist, zur Messung der Verformung der Membran, wobei das Substrat, die Membran und das Dehnungsmesselement aus ein und demselben Material gefertigt sind. Die verformbare Membran ist einstückig mit dem Substrat ausgebildet. Dadurch ergibt sich eine noch verbesserte Hochtemperaturstabilität und es ergeben sich geringere Verspannungen. Ein zusätzlicher Vorteil ist, dass das Hochtemperatur-Drucksensorelement mit Techniken der Mikromechanik hergestellt werden kann. Weiterhin ist der Innenraum im Messbetrieb hermetisch abgeschlossen.

Durch die Erfindung können Messungen von Drücken bei Temperaturen bis weit über 400°C, beispielsweise bei ca. 1000 °C, erfolgen. Weiterhin ergibt sich insbesondere bei geringeren Temperaturen eine Verlängerung der Lebensdauer im Vergleich zu den bisher bekannten Drucksensoren. Der erfindungsgemäße Drucksensor eignet sich daher insbesondere auch zum Einsatz in Flugzeug- und Raketentriebwerken. Das Hochtemperatur-Drucksensorelement hat eine besonders hohe Temperaturstabilität, da die Materialien der Bauteile gleich sind und somit keine Verspannungen aufgrund unterschiedlicher Ausdehnungskoeffizienten auftreten. Dadurch wird z.B. vermieden, dass sich das Dehnungsmesselement allein schon aufgrund einer Temperaturänderung der sensitiven Schicht anders ausdehnt als das Substrat bzw. der Träger und somit Verspannungen verursacht.

Bei der vorliegenden Erfindung werden also bis auf die Isolatorschicht alle Komponenten des Sensorelementes aus demselben Material - einer hochtemperaturstabilen Metalllegierung - gefertigt. Zudem kann das Gehäuse auch aus diesem Metall gefertigt sein. Dadurch werden thermisch induzierte Verspannungen minimiert. Die hochtemperaturstabile Metalllegierung ist überdies resistent in vielen aggressiven Atmosphären und auch bei hoher Temperatur noch in einem weiten Dehnungsbereich elastisch. Außerdem ist der spezifische Widerstand nur schwach von der Temperatur abhängig. Die für Triebwerke und Gehäuse verwendete hochtemperaturstabile Nickelbasislegierung Haynes 230 wird bevorzugt als Sputtertarget verwendet, um dieses Material als gesputterte Dünnschicht für diese mikrosystemtechnische Anwendung zu verwenden.

Bevorzugt sind die Bestandteile des Drucksensorelements und das Gehäuse aus demselben Material gefertigt wie eine Triebwerkswand, in die das Gehäuse eingeschraubt werden kann.

Vorteilhafterweise ist das Dehnungsmesselement eine sensitive Schicht, und insbesondere als Dehnungsmessstreifen in Form einer Dünnschicht-Leiterbahn ausgestaltet. Dadurch ergibt sich eine vereinfachte, schnelle und kostengünstige Fertigung.

Vorteilhafterweise ist das Hochtemperatur-Drucksensorelement zur Integration in einem Turbinenelement, beispielsweise einer Turbinenschaufel, ausgestaltet. Dies ergibt sich dadurch, dass das Hochtemperatur-Drucksensorelement in extrem kleiner Bauweise gefertigt werden kann und auch ohne Gehäuse einsetzbar ist. Beispielsweise kann der Innenraum des Substrats erst aufgrund der Integration in der Turbinenschaufel bzw. durch eine Teilfläche der Turbinenschaufel vollständig verschlossen werden.

Es ist aber auch möglich, den Innenraum durch eine Versiegelung hermetisch abzuschließen, die insbesondere ebenfalls aus demselben hochtemperaturstabilen Material gefertigt ist und z.B. durch Schweißen, insbesondere durch Elektronenstrahlschweißen, mit dem Substrat verbunden ist. Dadurch kann ein Referenzdruck hinter der Membran bzw. im Innenraum des Substrats erzeugt werden, wobei der Innenraum beispielsweise evakuiert ist.

Vorteilhaft ist zwischen der Membran und dem Dehnungselement eine Isolationsschicht ausgebildet, die zur elektrischen Isolierung dient. Die Isolationsschicht ist z.B. gebildet aus BN, MgO oder Al₂O₃ oder aus einer Kombination davon.

Bevorzugt ist die Isolationsschicht durch Sputtern auf der Membran aufgebracht. Sie kann aber auch durch ein SolGel-Verfahren oder Aufdampfen aufgebracht werden und durch Oxidation oder Annealing weiter optimiert werden.

Optional lässt sich über dem Dehnungsmesselement noch eine Passivierungsschicht aufbringen aus demselben Material und mit demselben Verfahren wie für die lsolationsschicht. Dadurch wird die Lebensdauer des Dehnungsmesselements weiter erhöht.

Vorteilhafterweise wird das Hochtemperatur-Drucksensorelement in einem Hochtemperatur-Drucksensor für Triebwerke, insbesondere Flugzeug- und Raketentriebwerke, verwendet. Somit können auch unter sehr rauen Umgebungsbedingungen die herrschenden Drücke genau und zuverlässig bestimmt werden. Dabei ist das Hochtemperatur-Drucksensorelement besonders bevorzugt in einer Turbinenschaufel integriert.

Gemäß einem Aspekt der Erfindung wird ein Verfahren zur Herstellung eines Hochtemperatur-Drucksensors angegeben, mit den Schritten: Bereitstellen eines Substrats; Aufbringen einer Isolationsschicht auf dem Substrat; Aufbringen eines Dehnungsmesselements über der Isolationsschicht; optional Aufbringen einer Passivierungsschicht aus dem-selben Material und mit demselben Verfahren wie bei der Isolationsschicht; und Herstellen einer verformbaren Membran aus dem Teilbereich des Substrats, so dass anschließend das Dehnungsmesselement auf der Membran angeordnet ist, um eine Verformung der Membran zu messen, wobei das Substrat, die Membran und das Dehnungsmesselement aus demselben hochtemperaturstabilen Material gefertigt sind.

Vorteilhafterweise wird die verformbare Membran aus dem Substrat von dessen Rückseite her herausgearbeitet, so dass in dem Substrat eine Ausnehmung gebildet wird.

Beispielsweise wird das Substrat derart geformt, dass auf der Rückseite der Membran ein Innenraum ausgestaltet ist, der im Messbetrieb hermetisch abgeschlossen ist.

Nachfolgend wird die Erfindung beispielhaft anhand der Zeichnungen beschrieben, in denen
- **Fig. 1**: ein erfindungsgemäßes Hochtemperatur-Drucksensorelement gemäß einer ersten bevorzugten Ausführungsform zeigt;
- **Fig. 2**: ein Hochtemperatur-Drucksensorelement gemäß einer anderen bevorzugten Ausführungsform zeigt, das durch eine Versiegelung verschlossen ist; und
- **Fig. 3**: ein Beispiel für ein Dehnungsmesselement zeigt, das auf einer Membran angeordnet ist bzw. wird.

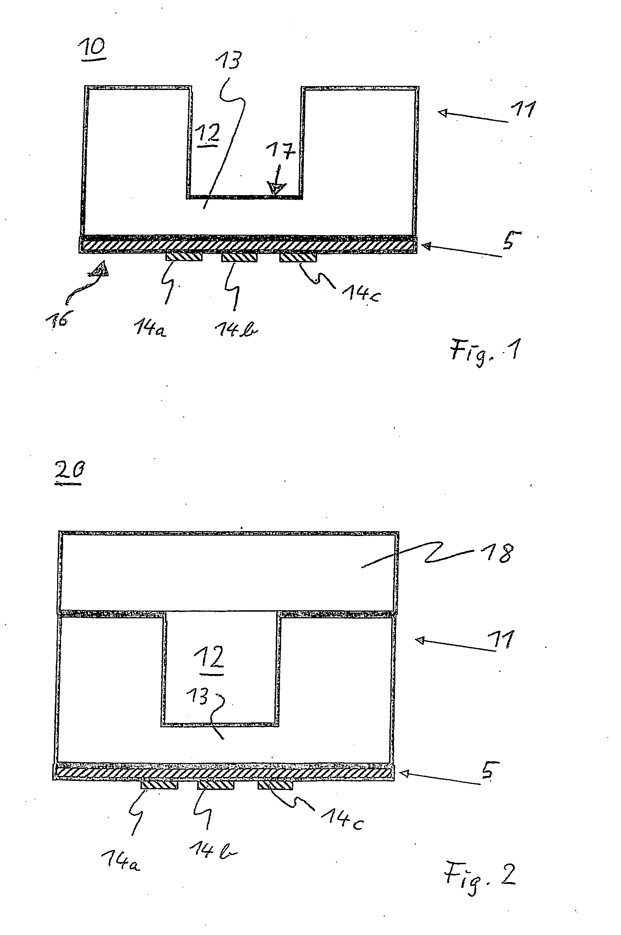

Figur 1 zeigt ein erfindungsgemäßes Hochtemperatur-Drucksensorelement 10 zur Messung von Drücken auch oberhalb von 400 °C. Das Hochtemperatur-Drucksensorelement 10 bzw. der Drucksensor besteht aus einem Substrat 11, in dem ein Innenraum 12 ausgestaltet ist. Weiterhin ist eine verformbare Membran 13 vorgesehen, die im Betrieb den Innenraum 12 vom Außenraum trennt und sich bei einer Änderung des äußeren Druckes gegenüber dem Druck im Innenraum 12 verformt. Dabei ist der Innenraum 12 beim Betrieb des Sensors vollständig abgeschlossen. Auf der verformbaren Membran 13 ist eine Anordnung bzw. Struktur von Dehnungsmessstreifen 14a, 14b, 14c angeordnet, die ein Dehnungsmesselement zur Messung der Verformung der Membran 13 bilden. Dabei sind die Membran 13, das Substrat 11 und das Dehnungsmesselement 14a, 14b, 14c aus ein und demselben hochtemperaturstabilen Material gebildet, vorzugsweise aus einer Legierung wie beispielsweise eine Nickelbasislegierung, z.B. Haynes 230.

Dadurch treten vor allem auch bei hohen Temperaturen geringe thermisch induzierte Spannungen auf, die zu Messfehlern führen, da die verschiedenen Bauteile keine unterschiedlichen thermischen Ausdehnungskoeffizienten besitzen. Bei Verwendung von Materialien mit unterschiedlichem Ausdehnungskoeffizienten kann es bereits nach wenigen Temperaturzyklen zu Materialversagen kommen.

Die Nickelbasislegierung Haynes 230 hat den Vorteil, dass sie nicht nur hochtemperaturstabil und resistent in vielen aggressiven Atmosphären ist, sondern zudem auch bei hoher Temperatur noch in einem weiten Dehnungsbereich elastisch ist.

Zwischen der Membran 13 und dem Dehnungsmesselement 14a, 14b, 14c ist eine Isolationsschicht 5 angeordnet. Dadurch wird das elektrisch leitfähige Sensorelement in Form des Dehnungsmesselements 14a, 14b, 14c elektrisch von der Membran 13 isoliert, die in diesem bevorzugten Ausführungsbeispiel aus einer elektrisch leitfähigen Legierung gefertigt ist.

Um vor allem bei hohen Temperaturen thermisch induzierte Spannungen noch effektiver zu vermeiden, ist die Isolationsschicht 5 im Vergleich zur Membran 13 relativ dünn ausgebildet. Dabei sollte die Isolationsschicht 5 aus einem Material gebildet sein, dessen thermischer Ausdehnungskoeffizient so weit wie möglich an denjenigen der Legierung bzw. der Membran 13 und des Substrats 11 angepasst ist. Da eine vollständige Anpassung des Ausdehnungskoeffizienten über den gesamten beim Betrieb abgedeckten Temperaturbereich kaum möglich ist, werden aufgrund der relativ geringen Dicke der Isolationsschicht 5 thermisch induzierte Spannungen dennoch weitgehend vermieden.

Im vorliegenden Beispiel ist die Isolationsschicht 5 aus BN durch Sputtern gebildet. Dadurch ergeben sich auch bei hohen Temperaturen gute Isolationseigenschaften. Ebenso möglich sind auch MgO oder Al₂O₃, die durch Sputtern, Aufdampfen oder per SolGel-Verfahren aufgebracht werden und durch anschließende Oxidation oder Annealing verbessert werden können, oder auch Kombinationen der genannten Materialien.

Der Innenraum 12 lässt sich durch Aufbringen der Versiegelung 18 (siehe Fig. 2) verschließen. Das hermetische Abdichten erfolgt z.B. durch Elektronenstrahlschweißen. Dadurch entsteht ein bereits voll funktionsfähiger Drucksensor. Abgesehen von direkter Integration z.B. in Turbinenschaufeln wird er jedoch nicht in dieser Form verwendet, sondern noch in ein Gehäuse eingebaut.

Das Substrat 11 und die Membran 13 sind einstückig ausgebildet. D.h., die Membran 13 wird durch einen Teilbereich des Substrats 11 gebildet, das entsprechend geformt ist, um den Innenraum 12 mittels der Membran 13 nach außen hin abzugrenzen.

Das Dehnungsmesselement 14a, 14b, 14c ist im vorliegenden Fall als Dehnungsmessstreifen in Form einer Dünnschicht-Leiterbahn ausgestaltet. Bei einer Verformung der Membran 13 liefert das Dehnungsmesselement 14a, 14b, 14c aufgrund einer Änderung seines elektrischen Widerstands ein Signal an eine Auswerteeinheit, das dem außen anliegenden Druck entspricht.

Der Drucksensor 10 gemäß dieser ersten bevorzugten Ausführungsform ist zur Integration in ein Turbinenelement, beispielsweise einer Turbinenschaufel, ausgestaltet. Es kann aber allgemein in Bauteile jeglicher Art integriert werden, in deren Umgebung der Druck gemessen werden soll. Dabei wird der Innenraum 12 erst durch die Integration in das Turbinenelement verschlossen bzw. hermetisch abgeriegelt, so dass nur noch die Vorderseite 16 des Drucksensors 10 an den Außenraum angrenzt, in dem der Druck gemessen wird. Zu diesem Zweck ist die Rückseite des Innenraums 12 offen und durch das Substrat 11 umgrenzt, d.h. der Innenraum 12 bildet eine Ausnehmung in dem Substrat 11. Aufgrund der besonderen Gestaltung des Drucksensors 10 durch ein einziges Substrat 11, das sowohl die Membran 13 bildet als auch die Bereitstellung bzw. Umgrenzung des Innenraums 12 in der Art einer Kapsel, ergibt sich eine so kleine Bauweise, dass der Drucksensor in Bauteile mit relativ geringer Dicke, wie beispielsweise in eine Turbinenschaufel, vollständig integriert werden kann. Der Drucksensor 10 dieser ersten bevorzugten Ausführungsform kann aber auch in ein separates Drucksensor-Gehäuse eingebaut und dabei kontaktiert werden. Dabei wird durch entsprechende Gestaltung des Gehäuses der Innenraum 12 verriegelt bzw. hermetisch abgeschlossen.

Bei einer vorgesehenen Integration des Hochtemperatur-Drucksensorelements 10 in eine Turbinenschaufel oder in ein sonstiges Triebwerkselement, ist das hochtemperaturstabile Material des Drucksensorelements 10 vorzugsweise gleich dem Material des Triebwerkselements, in das das Sensorelement oder Sensorgehäuse z.B. eingeschraubt wird.

Bei der Druckmessung besteht im Innenraum 12 ein Referenzdruck auf der Rückseite 17 der Membran 13, so dass die Membran 13 bei einer Änderung des von außen anliegenden Drucks verformt wird.

Da Substrat (11), Membran (13) und Dehnungsmesselemente (14a, 14b, 14c) aus dem selben Material gefertigt ist, kann das Sensorelement 10 direkt in ein Gehäuse eingeschweißt werden, ohne Pufferschichten verwenden zu müssen, die nachteilige Effekte durch unterschiedliche thermische Ausdehnungskoeffizienten verringern sollen.

Figur 2 zeigt einen Hochtemperatur-Drucksensor 20 gemäß einer zweiten bevorzugten Ausführungsform. Der Drucksensor 20 entspricht im Aufbau dem oben beschriebenen Drucksensor 10 gemäß dem ersten Ausführungsbeispiel, wobei jedoch zusätzlich eine Versiegelung 18 vorgesehen ist, die auf der Rückseite des Substrats 11 derart angeordnet ist, dass sie den Innenraum 12 verschließt bzw. hermetisch abriegelt. Dabei ist die Versiegelung 18 ebenfalls aus demselben hochtemperaturstabilen Material wie das Substrat 11 gefertigt und durch Schweißen mit dem Substrat 11 fest verbunden. Auf diese Weise kann bei der Herstellung ein definierter Referenzdruck, insbesondere Vakuum, im Innenraum vorgesehen werden. Dadurch entsteht eine voll funktionsfähige Drucksensor-Kapsel, bei der alle Elemente sehr ähnliche thermische Ausdehnungskoeffizienten besitzen.

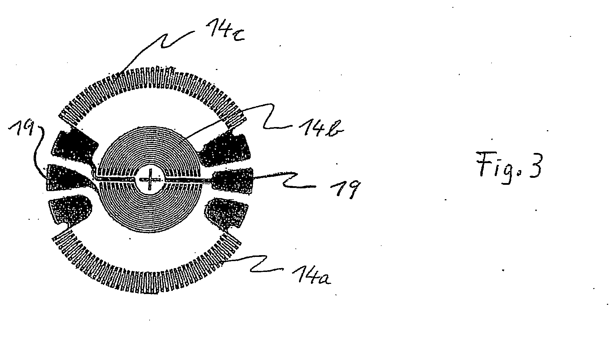

Figur 3 zeigt ein Beispiel für eine Dehnungsmessstreifen-Struktur, die als Dehnungsmesselement auf der Membran 13 des erfindungsgemäßen Drucksensors 10, 20 angeordnet ist. Die Dehnungsmessstreifen 14a, 14b, 14c sind mäanderförmig ausgestaltet und als Dünnschicht-Leiterbahnen auf der Membran 13 (s. Figuren 1 und 2) angeordnet. Die Form der Dehnungsmessstreifen-Struktur und ihre äußere Begrenzung entspricht im Wesentlichen der Membranfläche 13, d.h., die rund ausgestaltete äußere Begrenzung bzw. die äußeren Dehnungsmessstreifen 14a, 14c sind im Randbereich der Membran 13 auf deren Oberseite angeordnet, während sich im Zentrum der Membran 13 der Dehnungsmessstreifen 14b befindet.

Zur Herstellung des erfindungsgemäßen Hochtemperatur-Drucksensorelements wird zunächst ein Substrat aus einem hochtemperaturstabilen Material, im vorliegenden Fall eine Legierung, insbesondere Nickelbasislegierung bereitgestellt. Anschließend wird eine Isolationsschicht auf das Substrat aufgebracht, beispielsweise durch Abscheidung. Auf die Isolationsschicht wird eine sensitive Schicht aufgebracht, die das Dehnungsmesselement 14a, 14b, 14c bildet. Die sensitive Schicht wird durch Sputtern aufgebracht, wobei als Sputtertarget die Nickelbasislegierung verwendet wird, aus der Substrat 11 und Membran 13 gefertigt sind und aus der auch das Gehäuse hergestellt werden kann. Optional lässt sich über dem Dehnungsmesselement noch eine Passivierungsschicht aufbringen aus dem selben Material und mit demselben Verfahren wie für die Isolationsschicht. Dadurch wird die Lebensdauer des Dehnungsmesselements weiter erhöht. Die Passivierungsschicht wird lediglich im Bereich der Kontaktflächen 19 geöffnet. Nun erfolgt das Herstellen der Membran 13 in dem Substrat, beispietsweise von dessen Rückseite her durch Schleifen, Ultraschall-Erodieren, Laserbearbeitung oder Elektronenstrahl-Dampfverfahren. Dabei wird die Membran aus dem Teilbereich des Substrats gefertigt, auf dem die sensitive Schicht als Dünnschicht-Leiterbahn aufgebracht ist. Alternativ kann auch zuerst die Membran gefertigt und anschließend die Isolationsschicht und die sensitive Schicht aufgebracht werden.

Optional wird auf dem Substrat noch zusätzlich ein Platinmäander abgeschieden und strukturiert, der einen Temperatursensor bildet. Das Abscheiden und Strukturieren des Platinmäanders erfolgt abseits der Membran, d.h. außerhalb des Bereichs, in dem sich die Dehnungsmessstreifenstruktur befindet. Der Temperatursensor ermöglicht eine Temperaturkompensation, die insbesondere bei sehr hohen Temperaturen das Messergebnis noch weiter verbessert. Die Temperaturkompensation betrifft insbesondere die Temperaturabhängigkeit des K-Faktors der DMS. Die Temperaturkompensation ist relativ einfach hinsichtlich des spezifischen Widerstands, da dieser bei der Nickelbasislegierung Haynes 230 nur gering von der Temperatur abhängt.

## Patentansprüche

1. Hochtemperatur-Drucksensorelement (10; 20), insbesondere für Triebwerke, mit
einem Substrat (11), in dem ein Innenraum (12) ausgestaltet ist,
einer verformbaren Membran (13), die den Innenraum (12) vom Außenraum trennt, um sich im Betrieb bei einer Änderung des äußeren Druckes zu verformen,
einem Dehnungsmesselement (14a, 14b, 14c), das auf der Membran (13) angeordnet ist, zur Messung der Verformung der Membran (13),
**dadurch gekennzeichnet,**
- **dass** das Substrat (11), die Membran (13) und das Dehnungsmesselement (14a, 14b, 14c) aus demselben hochtemperaturstabilen Material gefertigt sind,
- **dass** die verformbare Membran (13) einstückig mit dem Substrat (11) ausgebildet ist und
- **dass** der Innenraum von einer auf der Rückseite der Membran vorgesehenen Ausnehmung gebildet und im Messbetrieb hermetisch abgeschlossen ist.

2. Hochtemperatur-Drucksensorelement gemäß Anspruch 1, **dadurch gekennzeichnet, dass** das hochtemperaturstabile Material eine Legierung ist, vorzugsweise eine Nickelbasislegierung, vorzugsweise Haynes 230.

3. Hochtemperatur-Drucksensorelement gemäß Anspruch 1 oder 2, **gekennzeichnet durch** ein Gehäuse, das ebenfalls aus demselben hochtemperaturstabilen Material gefertigt ist.

4. Hochtemperatur-Drucksensorelement nach einem der vorhergehenden Ansprüche, **dadurch gekennzeichnet, dass** das Dehnungsmesselement (14a, 14b, 14c) ein Dehnungsmessstreifen in Form einer hochtemperaturstabilen Dünnschicht-Leiterbahn ist.

5. Hochtemperatur-Drucksensorelement nach einem der vorhergehenden Ansprüche, **dadurch gekennzeichnet, dass** es zur Integration in einem Turbinenelement, insbesondere einer Turbinenschaufel, ausgestaltet ist.

6. Hochtemperatur-Drucksensorelement nach einem der vorhergehenden Ansprüche, **dadurch gekennzeichnet, dass** der Innenraum (12) durch eine Versiegelung (18) hermetisch abgeschlossen ist, die ebenfalls aus demselben hochtemperaturstabilen Material gefertigt ist.

7. Hochtemperatur-Drucksensorelement nach einem der vorhergehenden Ansprüche, **gekennzeichnet durch** eine Isolationsschicht (5), die zur elektrischen Isolierung zwischen dem Dehnungsmesselement (14a, 14b, 14c) und der Membran (13) angeordnet ist, und eine optionale Passivierungsschicht, die das Dehnungsmesselement überdeckt aus demselben Material und mit demselben Verfahren hergestellt ist wie die Isolationsschicht (5).

8. Hochtemperatur-Drucksensorelement nach Anspruch 7, **dadurch gekennzeichnet, dass** die Isolationsschicht (5) einen Wärmeausdehnungskoeffizienten besitzt, der an den Wärmeausdehnungskoeffizienten des hochtemperaturstabilen Materials angepasst ist.

9. Hochtemperatur-Drucksensorelement nach Anspruch 7 oder 8, **dadurch gekennzeichnet, dass** die Isolationsschicht (5) aus einem der Materialien BN, MgO oder Al₂O₃, vorzugsweise mit anschließender Oxidation oder Annealing gebildet ist, oder aus einer Kombination davon.

10. Hochtemperatur-Drucksensorelement nach Anspruch 7 oder 8, **dadurch gekennzeichnet, dass** die Isolationsschicht (5) durch Sputtern auf der Membran (13) aufgebracht ist oder alternativ durch Aufdampfen oder SolGel-Verfahren gebildet ist.

11. Verwendung eines Hochtemperatur-Drucksensorelements nach einem der vorhergehenden Ansprüche in einem Hochtemperatur-Drucksensor für Triebwerke, insbesondere Flugzeug- und Raketentriebwerke.

12. Bauteil für Triebwerke, insbesondere Turbinenschaufel, **dadurch gekennzeichnet, dass** ein Drucksensorelement nach einem der Ansprüche 1 bis 10 in das Bauteil integriert ist, um den Druck innerhalb des Triebwerks zu messen.

13. Verfahren zur Herstellung eines Hochtemperatur-Drucksensorelements, mit den Schritten:
Bereitstellen eines Substrats (11);
Aufbringen einer Isolationsschicht (5) auf dem Substrat (11); Aufbringen und Strukturieren einer sensitiven Schicht zur Bildung von Dehnungsmesselementen (14a, 14b, 14c) über der Isolationsschicht (5);
und
Herstellen einer verformbaren Membran (13) aus einem Teilbereich des Substrats (11), so dass anschließend die Dehnungsmesselemente (14a, 14b, 14c) auf der Membran (13) angeordnet sind um eine Verformung der Membran (13) zu messen,
**dadurch gekennzeichnet,**
**dass** das Substrat (11), die Membran (13) und das Dehnungsmesselement (14a, 14b, 14c) aus demselben hochtemperaturstabilen Material gefertigt sind, und dass die verformbare Membran (13) aus dem Substrat (11) von dessen Rückseite her herausgearbeitet wird, so dass in dem Substrat (11) eine Ausnehmung gebildet wird, und dass das Substrat (11) derart geformt wird, dass auf der Rückseite (17) der Membran (13) ein Innenraum (12) ausgestaltet ist, der im Messbetrieb hermetisch abgeschlossen ist.

14. Verfahren nach Anspruch 13, **dadurch gekennzeichnet, dass** eine hochtemperaturstabile Nickelbasislegierung, insbesondere Haynes 230, als Sputtertarget verwendet wird, um dieses Material als gesputterte Dünnschicht zu verwenden.

15. Verfahren nach einem der Ansprüche 13 oder 14, **dadurch gekennzeichnet, dass** das Sensorelement (10) direkt in ein Gehäuse eingeschweißt wird.

16. Verwendung eines Hochtemperatur-Drucksensorelements (10; 20) nach einem der Ansprüche 1 bis 10 in einem Triebwerk, das aus demselben hochtemperaturstabilen Material oder aus einer Nickelbasislegierung hergestellt ist.

## Claims

1. High-temperature pressure sensor element (10; 20), in particular for power units, comprising a substrate (11), in which an interior space (12) is formed,
a deformable membrane (13), which separates the interior space (12) from the exterior space, in order to deform during operation when the exterior pressure changes,
a strain measuring element (14a, 14b, 14c), which is arranged on the membrane (13), for measuring the deformation of the membrane (13),
**characterized**
- **in that** the substrate (11), the membrane (13) and the strain measuring element (14a, 14b, 14c) are produced from the same high-temperature-stable material,
- **in that** the deformable membrane (13) is formed in one piece with the substrate (11), and
- **in that** the interior space is formed by a recess provided on the rear side of the membrane and is hermetically closed off during measuring operation.

2. High-temperature pressure sensor element according to Claim 1, **characterized in that** the high-temperature-stable material is an alloy, preferably a nickel-based alloy, preferably Haynes 230.

3. High-temperature pressure sensor element according to Claim 1 or 2, **characterized by** a housing which is likewise produced from the same high-temperature-stable material.

4. High-temperature pressure sensor element according to one of the preceding claims, **characterized in that** the strain measuring element (14a, 14b, 14c) is a strain gauge in the form of a high-temperature-stable thin-film strip conductor.

5. High-temperature pressure sensor element according to one of the preceding claims, **characterized in that** it is designed for integration in a turbine element, in particular a turbine blade.

6. High-temperature pressure sensor element according to one of the preceding claims, **characterized in that** the interior space (12) is hermetically closed off by a seal (18) which is likewise produced from the same high-temperature-stable material.

7. High-temperature pressure sensor element according to one of the preceding claims, **characterized by** an insulation layer (5), which is arranged for electrical insulation between the strain measuring element (14a, 14b, 14c) and the membrane (13), and an optional passivation layer, which covers the strain measuring element made of the same material and is produced by the same method as the insulation layer (5).

8. High-temperature pressure sensor element according to Claim 7, **characterized in that** the insulation layer (5) has a coefficient of thermal expansion which is adapted to the coefficient of thermal expansion of the high-temperature-stable material.

9. High-temperature pressure sensor element according to Claim 7 or 8, **characterized in that** the insulation layer (5) is formed from one of the materials BN, MgO or Al₂O₃, preferably with subsequent oxidation or annealing, or from a combination thereof.

10. High-temperature pressure sensor element according to Claim 7 or 8, **characterized in that** the insulation layer (5) is applied to the membrane (13) by sputtering or alternatively is formed by vapour deposition or a sol-gel method.

11. Use of a high-temperature pressure sensor element according to one of the preceding claims in a high-temperature pressure sensor for power units, in particular aircraft engines and rocket engines.

12. Component for power units, in particular a turbine blade, **characterized in that** a pressure sensor element according to one of Claims 1 to 10 is integrated in the component in order to measure the pressure within the power unit.

13. Method for producing a high-temperature pressure sensor element, comprising the following steps:
providing a substrate (11);
applying an insulation layer (5) to the substrate (11); applying and structuring a sensitive layer for forming strain measuring elements (14a, 14b, 14c) over the insulation layer (5); and
producing a deformable membrane (13) from a partial region of the substrate (11), such that then the strain measuring elements (14a, 14b, 14c) are arranged on the membrane (13) in order to measure a deformation of the membrane (13), **characterized**
**in that** the substrate (11), the membrane (13) and the strain measuring element (14a, 14b, 14c) are produced from the same high-temperature-stable material, and in that the deformable membrane (13) is worked out of the substrate (11) from the rear side thereof, such that a recess is formed in the substrate (11), and in that the substrate (11) is shaped in such a manner that an interior space (12), which is hermetically closed off during measuring operation, is formed on the rear side (17) of the membrane (13).

14. Method according to Claim 13, **characterized in that** a high-temperature-stable nickel-based alloy, in particular Haynes 230, is used as the sputtering target in order to use this material as a sputtered thin film.

15. Method according to either of Claims 13 and 14, **characterized in that** the sensor element (10) is welded directly into a housing.

16. Use of a high-temperature pressure sensor element (10; 20) according to one of Claims 1 to 10 in a power unit which is produced from the same high-temperature-stable material or from a nickel-based alloy.

## Revendications

1. Élément capteur de pression à haute température (10 ; 20), notamment pour mécanismes de propulsion, comprenant
un substrat (11) dans lequel est formé un espace intérieur (12),
une membrane (13) déformable qui sépare l'espace intérieur (12) de l'espace extérieur de manière à se déformer pendant le fonctionnement lors d'une modification de la pression extérieure,
un élément de mesure de l'allongement (14a, 14b, 14c) qui est disposé sur la membrane (13) en vue de mesurer la déformation de la membrane (13),
**caractérisé en ce**
- **que** le substrat (11), la membrane (13) et l'élément de mesure de l'allongement (14a, 14b, 14c) sont fabriqués dans le même matériau stable à haute température,
- **que** la membrane (13) déformable est réalisée d'une seule pièce avec le substrat (11) et
- **que** l'espace intérieur est formé par un évidement prévu sur le côté arrière de la membrane et est fermé hermétiquement en mode de mesure.

2. Élément capteur de pression à haute température selon la revendication 1, **caractérisé en ce que** le matériau stable à haute température est un alliage, de préférence un alliage à base de nickel, de préférence du Haynes 230.

3. Élément capteur de pression à haute température selon la revendication 1 ou 2, **caractérisé par** un boîtier qui est lui aussi fabriqué dans le même matériau stable à haute température.

4. Élément capteur de pression à haute température selon l'une des revendications précédentes, **caractérisé en ce que** l'élément de mesure de l'allongement (14a, 14b, 14c) est une jauge extensométrique sous la forme d'une piste conductrice à couche mince stable à haute température.

5. Élément capteur de pression à haute température selon l'une des revendications précédentes, **caractérisé en ce qu'**il est configuré pour une intégration dans un élément de turbine, notamment une aube de turbine.

6. Élément capteur de pression à haute température selon l'une des revendications précédentes, **caractérisé en ce que** l'espace intérieur (12) est fermé hermétiquement par un scellement (18) qui est lui aussi fabriqué dans le même matériau stable à haute température.

7. Élément capteur de pression à haute température selon l'une des revendications précédentes, **caractérisé par** une couche isolante (5) qui est disposée entre l'élément de mesure de l'allongement (14a, 14b, 14c) et la membrane (13) pour réaliser l'isolation électrique, et une couche de passivation optionnelle, qui recouvre l'élément de mesure de l'allongement, est fabriquée avec le même matériau et avec le même procédé que la couche isolante (5).

8. Élément capteur de pression à haute température selon la revendication 7, **caractérisé en ce que** la couche isolante (5) possède un coefficient de dilatation thermique qui est adapté au coefficient de dilatation thermique du matériau stable à haute température.

9. Élément capteur de pression à haute température selon la revendication 7 ou 8, **caractérisé en ce que** la couche isolante (5) est réalisée dans l'un des matériaux BN, MgO ou Al₂O₃, de préférence avec ensuite une oxydation ou un recuit, ou dans une combinaison de ceux-ci.

10. Élément capteur de pression à haute température selon la revendication 7 ou 8, **caractérisé en ce que** la couche isolante (5) est appliquée sur la membrane (13) par pulvérisation cathodique ou, en variante, est formée par métallisation sous vide ou par procédé sol-gel.

11. Utilisation d'un élément capteur de pression à haute température selon l'une des revendications précédentes dans un capteur de pression à haute température pour mécanismes de propulsion, notamment des mécanismes de propulsion d'aéronef ou de fusée.

12. Composant pour mécanismes de propulsion, notamment des aubes de turbine, **caractérisé en ce qu'**un élément capteur de pression selon l'une des revendications 1 à 10 est intégré dans le composant pour mesurer la pression à l'intérieur du mécanisme de propulsion.

13. Procédé de fabrication d'un élément capteur de pression à haute température comprenant les étapes suivantes :
mise à disposition d'un substrat (11) ;
application d'une couche isolante (5) sur le substrat (11) ;
application et structuration d'une couche sensible pour la formation d'éléments de mesure de l'allongement (14a, 14b, 14c) sur la couche isolante (5) ; et fabrication d'une membrane (13) déformable à partir d'une zone partielle du substrat (11) de sorte que les éléments de mesure de l'allongement (14a, 14b, 14c) soient ensuite disposés sur la membrane (13) en vue de mesurer une déformation de la membrane (13),
**caractérisé en ce**
**que** le substrat (11), la membrane (13) et l'élément de mesure de l'allongement (14a, 14b, 14c) sont fabriqués dans le même matériau stable à haute température, et en ce que la membrane (13) déformable est façonnée à partir du substrat (11) depuis le côté arrière de celui-ci de manière à former un évidement dans le substrat (11), et en ce que le substrat (11) est façonné de telle sorte qu'un espace intérieur (12) est configuré sur le côté arrière (17) de la membrane (13),
lequel est fermé hermétiquement en mode de mesure.

14. Procédé selon la revendication 13, **caractérisé en ce qu'**un alliage à base de nickel stable à haute température, notamment du Haynes 230, est utilisé comme cible de la pulvérisation cathodique afin d'utiliser ce matériau en tant que couche mince de pulvérisation cathodique.

15. Procédé selon l'une des revendications 13 ou 14, **caractérisé en ce que** l'élément capteur (10) est fixé par soudage directement dans un boîtier.

16. Utilisation d'un élément capteur de pression à haute température (10 ; 20) selon l'une des revendications 1 à 10 dans un mécanisme de propulsion qui est fabriqué dans le même matériau stable à haute température ou dans un alliage à base de nickel.
